# EUROPÄISCHE PATENTSCHRIFT

(11) **EP 2 965 854 B1**
(45) Veröffentlichungstag und Bekanntmachung des Hinweises auf die Patenterteilung: **02.09.2020**
(21) Anmeldenummer: 14176181.7
(22) Anmeldetag: 08.07.2014
(51) Int. Cl.: B23K 26/08, B23K 26/00

(54) **Verfahren und Vorrichtung zur oberflächenselektiven Konditionierung von Stahlbandoberflächen**
Method and device for surface-selective conditioning of steel strip surfaces
Procédé et dispositif de conditionnement de surfaces de feuillards d'acier à l'aide d'une technique sélective en surface

(43) Veröffentlichungstag der Anmeldung: 13.01.2016
(73) Patentinhaber: ThyssenKrupp Steel Europe AG, 47166 Duisburg (DE); thyssenkrupp AG, 45143 Essen (DE)
(72) Erfinder: Etzold, Ulrich, 47647 Kerken (DE); Kuhn, Patrick, 44141 Dortmund (DE); Liebscher, Bejamin Johannes, 56412 Welschneudorf (DE)
(74) Vertreter: Loock, Jan Pieter

(56) Entgegenhaltungen:
- WO-A1-2004/003239
- DE-A1-102005 026 968
- DE-A1-102007 020 748
- DE-A1-102011 000 984
- US-A1- 2005 237 895

## Beschreibung

### Stand der Technik

Die vorliegende Erfindung geht aus von einem Verfahren zur Konditionierung von Stahlbandoberflächen.

Bei beschichtetem Stahlband in Form von elektrolytisch mit Zink oder Zink-Legierung veredeltem Stahlband tritt häufig das Problem auf, dass es bei der Weiterverarbeitung zu lokalen Beschichtungsfehlern, wie beispielsweise Lackkratern beim mehrstufigen Lackauftrag, kommt. Solche Beschichtungsfehler entstehen an solchen Stellen des Stahlbandes, in denen vor der elektrolytischen Stahlbandveredelung auf dem Stahlband bereits Oberflächenfehler vorliegen. Solche Oberflächenfehler entsprechen den prozesstechnisch bedingten Ungänzen von Stahlbandoberflächen, d.h. die Oberflächenfehler umfassen typischerweise oberflächennahe mit der Stahlmatrix nur teilweise verbundene Stahlüberschiebungen wie sogenannte Flaps oder flitterartige, metallische Aufwalzungen, die vorwiegend aus den Fertigungsschritten in den Warmwalz-, Kaltwalz- und Beizanlagen stammen. Solche Flaps können beispielsweise Partikel sein, die nicht an allen Seiten an das Stahlband fest angebunden sind und beim Überwalzen von losen Metallpartikeln entstehen. Es ist daher ein Anliegen, die unbeschichtete Stahloberfläche mit seinen prozesstechnisch bedingten Ungänzen derartig zu konditionieren, dass ein daraus gefertigtes, elektrolytisch mit Zink oder Zinklegierungen veredeltes Stahlband eine Weiterverarbeitung ohne qualitätsmindernde Lackfehler, wie beispielsweise Lackkrater, durchläuft.

Die Druckschrift DE 30 37 271 A1 offenbart ein Verfahren zur porenfreien Glättung der Oberfläche von unbeschichteten Metallblechen, bei welchem die Oberfläche der Metallbleche mit Laserstrahlen beaufschlagt und angeschmolzen werden. Eine Angabe von Laserstrahlparametern, mit welchen die Oberflächenglättung erzielt oder maximiert wird, enthält die Druckschrift nachteiligerweise nicht.

Die Druckschrift DE 10 2011 000 984 A1 offenbart ferner ein Verfahren zum Veredeln einer metallischen Beschichtung auf einem Stahlband mit Hilfe eines Laserstrahls, welcher über die Oberfläche der Beschichtung geführt wird, um die Beschichtung auf eine Temperatur oberhalb der Schmelztemperatur des Materials der Beschichtung aufzuheizen und zwischen dem Stahlband und der Beschichtung eine Legierungsschicht zu erzeugen. Nachteiligerweise ist eine Laserbehandlung ausschließlich der Oberfläche des Stahlbands selbst nicht vorgesehen ist.

Aus den Druckschriften DE 10 2011 121 545 B4 und DE 10 2011 121 546 B4 sind ferner Verfahren zum Strukturieren bzw. Aufrauen von Werkstückoberflächen bekannt, bei dem durch eine Laserbehandlung Oberflächenstrukturen im Sub-Mikrometerbereich erzeugt werden. Die Parameter des Laserstrahls zielen nachteiligerweise ausschließlich auf das Aufrauen der Werkstückoberfläche ab.

Aus den Druckschriften WO 2004 / 003 239 A1 und DE 10 2005 026 968 A1 sind Verfahren zum Laserpolieren von Oberflächen bekannt. Die Druckschrift US 2005 / 237 895 A1 offenbart ein Verfahren zur Oberflächenbehandlung von Halbleitern.

### Offenbarung der Erfindung

Es ist eine Aufgabe der vorliegenden Erfindung ein Verfahren und eine Vorrichtung bereitzustellen, bei welchem die Oberfläche von Stahlband konditioniert wird, um der Bildung von Beschichtungsfehlern in einem nachfolgenden Verarbeitungsprozess vorzubeugen.

Gelöst wird die Aufgabe mit einem Verfahren nach Anspruch 1.

Das erfindungsgemäße Verfahren ermöglicht in vorteilhafter Weise eine effiziente Konditionierung der Oberfläche eines zu beschichtenden Stahlbandes, so dass Beschichtungsfehler beim Beschichten des Stahlbandes in dem anschließenden Beschichtungsprozess vermieden werden. Insbesondere werden mittels der Laserbehandlung die prozesstechnisch bedingten Ungänzen von Stahlbandoberflächen, wie beispielsweise Flaps, unschädlich gemacht. Dadurch wird trotz deren nachgeschalteten Abdeckung beispielsweise durch elektrolytisch abgeschiedene, metallische Veredelungsschichten die Bildung von Lackfehler weitgehend verhindert. Es wurde dabei in überraschender und nicht zu erwartender Weise gefunden, dass eine im Vergleich zum Stand der Technik verbesserte Konditionierung dann erreicht wird, wenn der Puls-zu-Puls-Überlapp (auch als Pulsüberlapp bezeichnet) oder der Zeilen-Überlapp des Laserstrahls mehr als 5 Prozent umfasst. Der Puls-zu-Puls-Überlapp umfasst im Sinne der vorliegenden Erfindung insbesondere denjenigen Überlapp zwischen zwei benachbarten Laserpulsen, welche bei einem zeilenweisen Abtasten der Stahlblechoberfläche mit dem Laserstrahl entlang einer Zeile hintereinander liegen. Die für die Behandlung notwendige Wechselwirkungszeit wird entweder dadurch realisiert, dass ein zeitlich gepulster Laserstrahl von der Lasereinheit erzeugt wird oder dass ein permanenter Laserstrahl von der Lasereinheit erzeugt wird, welcher mittels der Scannereinheit mit entsprechender Geschwindigkeit über das Stahlband bewegt wird. Die Wechselwirkungszeit des Laserstrahls auf der Stahloberfläche entspricht der Pulsdauer eines gepulsten Lasers. Bei einem gepulsten Laser ergibt sich der Puls-zu-Puls-Überlapp aus der Überlappung des Laserstrahls bei zwei aufeinanderfolgenden Takten in einem Punkt der Stahlbandoberfläche, so dass eine Zeile erzeugt wird. Der Zeilen-Überlapp (auch als Linienüberlapp bezeichnet) entspricht der Überlagerung zweier Zeilen bei der Verwendung eines Dauerstrichlasers anstelle eines gepulsten Lasers. Der Zeilenüberlapp des Dauerstrichlasers soll von den Parametern dem Puls-zu-Puls-Überlapp des gepulsten Lasers äquivalent sein. Die Lasereinheit kann demnach einen gepulsten Laser oder einen Dauerstrichlaser (cw-Laser) umfassen. Das Konditionieren des Stahlbandes umfasst im Sinne der vorliegenden Erfindung insbesondere ein selektives Aufschmelzen, Einformen und Glätten der Stahlbandoberfläche.

Gemäß einer bevorzugten Ausführungsform der vorliegenden Erfindung ist vorgesehen, dass der Laserstrahl auf der Stahlbandoberfläche einen Puls-zu-Puls- oder Zeilen-Überlapp von wenigstens 10%, bevorzugt von wenigstens 25%, besonders bevorzugt von wenigstens 50% und ganz besonders bevorzugt wenigstens 60% oder im Wesentlichen 60% umfasst.

Gemäß einer bevorzugten Ausführungsform der vorliegenden Erfindung ist vorgesehen, dass der Laserstrahl mittels der Scannereinheit derart geführt wird, dass der Laserstrahl auf der Stahlbandoberfläche einen Puls-zu-Puls- oder Zeilen-Überlapp von 50%±10% umfasst. Auf diese Weise wird stets eine zweifache Behandlung der Stahlbandoberfläche erzielt. Alternativ wäre aber auch denkbar, dass eine einfache Behandlung der Stahlbandoberfläche gewünscht ist. In diesem Fall wird der Laserstrahl mittels der Scannereinheit insbesondere derart geführt, dass der Laserstrahl auf der Stahlbandoberfläche einen Puls-zu-Puls- oder Zeilen-Überlapp von im Wesentlichen 15%±10% umfasst

Gemäß einer bevorzugten Ausführungsform der vorliegenden Erfindung ist vorgesehen, dass die Lasereinheit derart konfiguriert ist, dass ein Laserstrahl mit einer Pulsenergiedichte größer als 1 J/cm² ausgestrahlt wird. In überraschender und nicht zu erwartender Weise hat sich gezeigt, dass bei der Verwendung eines Laserstrahls mit einer Pulsenergiedichte größer als 1 J/cm² eine effiziente Konditionierung der Oberfläche eines zu beschichtenden Stahlbandes erreicht wird, so dass Beschichtungsfehler beim Weiterverarbeiten des Stahlbandes im Vergleich zum Stand der Technik reduziert werden können.

Gemäß einer bevorzugten Ausführungsform der vorliegenden Erfindung ist vorgesehen, dass mittels der Lasereinheit ein Laserstrahl mit Pulsenergiedichten zwischen 1 J/cm² und 10 J/cm², bevorzugt zwischen 2,25 J/cm² und 10 J/cm² und besonders bevorzugt zwischen 3,5 J/cm² und 10 J/cm² ausgestrahlt wird. Denkbar wäre alternativ aber auch, dass mittels der Lasereinheit ein Laserstrahl mit Pulsenergiedichten zwischen 1 J/cm² und 6 J/cm², bevorzugt zwischen 2,25 J/cm² und 6 J/cm² und besonders bevorzugt zwischen 3,5 J/cm² und 6 J/cm² ausgestrahlt wird. Die Energiedichte des cw-Lasers entspricht der Pulsenergiedichte des gepulsten Lasers.

Gemäß einer bevorzugten Ausführungsform der vorliegenden Erfindung ist vorgesehen, dass der Laserstrahl mittels der Scannereinheit zeilenweise über die Stahlbandoberfläche geführt wird, wobei der Laserstrahl dabei derart geführt wird, dass der Zeilenüberlapp wenigstens 5%, bevorzugt wenigstens 10% und besonders bevorzugt wenigstens 20% umfasst. Der Zeilenüberlapp umfasst im Sinne der vorliegenden Erfindung insbesondere denjenigen Überlapp zwischen den Laserpulsen zweier benachbarter Zeilen, welche beim zeilenweisen Abtasten der Stahlblechoberfläche senkrecht zur Zeilenrichtung nebeneinander bzw. teilweise übereinander liegen, also die prozentuale Überdeckung von parallel verlaufenden Laserbehandlungsspuren (gepulst oder permanent). Der Zeilenüberlapp des cw-Lasers ist von den Parametern derart eingestellt, dass er dem Puls-zu-Puls-Überlapp des gepulsten äquivalent ist. Denkbar ist, dass das Stahlband während der Laserbehandlung entlang einer Transportrichtung mittels eines Transportmechanismus gefördert wird. In diesem Fall ist die Steuerung der Scannereinheit vorzugsweise mit der Fördergeschwindigkeit des Stahlbands entsprechend synchronisiert, um den vorstehend definierten Linienüberlapp zu erzielen.

Gemäß einer bevorzugten Ausführungsform der vorliegenden Erfindung ist vorgesehen, dass mittels der Lasereinheit ein Laserstrahl mit einer Pulsdauer zwischen 10 und 100 ns, bevorzugt zwischen 20 und 60 ns, besonders bevorzugt zwischen 25 und 35 ns und ganz besonders bevorzugt von im Wesentlichen 30 ns ausgestrahlt wird.

Gemäß einer bevorzugten Ausführungsform der vorliegenden Erfindung ist vorgesehen, dass mittels der Lasereinheit ein Laserstrahl mit einer Lichtfleckgröße auf der Stahlbandoberfläche zwischen 0,4 bis 1,8 Millimeter Durchmesser, bevorzugt zwischen 0,8 und 1,5 Millimeter Durchmesser und besonders bevorzugt zwischen 1 und 1,2 Millimeter Durchmesser ausgestrahlt wird. Der Lichtfleck umfasst vorzugsweise eine im Wesentlichen kreisrunde Grundfläche, deren Dimensionen durch den Durchmesser definiert wird.

Gemäß einer bevorzugten Ausführungsform der vorliegenden Erfindung ist vorgesehen, dass mittels der Lasereinheit ein Laserstrahl mit einer Lichtfleckgröße auf der Stahlbandoberfläche zwischen 0,4 bis 1,8 Millimeter Kantenlänge, bevorzugt zwischen 0,8 und 1,5 Millimeter Kantenlänge und besonders bevorzugt zwischen 1 und 1,2 Millimeter Kantenlänge ausgestrahlt wird. Der Lichtfleck umfasst vorzugsweise eine im Wesentlichen rechteckige oder quadratische Grundfläche, deren Dimensionen durch wenigstens eine der Kantenlängen definiert wird. Ein quadratischer oder rechteckiger Lichtfleck bietet den Vorteil, dass sich die Oberfläche einfacher vollständig behandeln lässt, d.h. es kann einfacher sichergestellt werden, dass jeder Punkt auf der Stahlbandoberfläche ausreichend behandelt wird.

Gemäß einer bevorzugten Ausführungsform der vorliegenden Erfindung ist vorgesehen, dass mittels der Lasereinheit ein Laserstrahl mit einer Pulsfrequenz zwischen 5 und 100 kHz ausgestrahlt wird.

Gemäß einer bevorzugten Ausführungsform der vorliegenden Erfindung ist vorgesehen, dass das Verfahren zur Konditionierung der Oberfläche von weichem IF-Stahl, höherfesten IF-Stahl und/oder Mehrphasen-Stahl (RA-, DP-, CP-Stahlgüten) eingesetzt wird. Das Verfahren ist prinzipiell aber auch auf das gesamte Stahlspektrum von Feinblech und Feinstblech anwendbar. Die Laserbehandlung wird insbesondere vor der kontinuierlichen Bandveredelung des Fein- oder Feinstblechs mit elektrolytisch abgeschiedenem Metall- oder Metall-Legierungsüberzügen (Zn, Al, Si, Fe, Mn, Mg, Sn,...) vorgenommen. Denkbar ist beispielsweise, dass das Stahlband in Form von Feinblech mit einer Materialstärke kleiner oder gleich 3 Millimeter vorliegt. Das Feinblech umfasst entweder warm oder kalt gewalztes Blech. Die Feinbleche werden nach der Laserbehandlung bevorzugt veredelt und können besonders bevorzugt in späteren Verfahrensschritten verzinnt, verzinkt, verkupfert, vernickelt, lackiert, emailliert oder kunststoffbeschichtet werden.

Gemäß einer bevorzugten Ausführungsform der vorliegenden Erfindung ist vorgesehen, dass das Verfahren unter Umgebungsatmosphäre durchgeführt wird. Alternativ wird das Verfahren unter einer Schutzgasatmosphäre durchgeführt, welches insbesondere ein mit der Oberfläche des Stahlbands nicht reagierendes Gas oder Gasgemisch ist.

Gemäß einer bevorzugten Ausführungsform der vorliegenden Erfindung ist vorgesehen, dass das Stahlband nach der Laserbehandlung der Stahlbandoberfläche veredelt wird, wobei das Stahlband bevorzugt mittels eines elektrolytischen Verfahrens veredelt wird und wobei das Stahlband besonders bevorzugt mittels einer elektrolytischen Verzinkung veredelt wird. Denkbar ist, dass die veredelte Stahlbandoberfläche in einem nachfolgenden Verfahrensschritt lackiert wird.

Gemäß einer bevorzugten Ausführungsform der vorliegenden Erfindung ist vorgesehen, dass das Stahlband beidseitig der Laserbehandlung unterzogen wird.

Es wird ein Stahlband, insbesondere aus weichem IF-Stahl, höherfestem IF-Stahl und/oder Mehrphasen-Stahl (RA-, DP-, CP-Stahlgüten) vorzugsweise in Form von Feinblech oder Feinstblech offenbart, dessen Oberfläche mit dem erfindungsgemäßen Verfahren konditioniert ist. Das Verfahren kann prinzipiell aber auf das gesamte Stahlspektrum von Feinblech und Feinstblech angewendet werden. Die Laserbehandlung wird insbesondere vor der kontinuierlichen Bandveredelung des Fein- oder Feinstblechs mit elektrolytisch abgeschiedenem Metall- oder Metall-Legierungsüberzügen (Zn, Al, Si, Fe, Mn, Mg, Sn,...) vorgenommen. Das erfindungsgemäße Stahlband hat gegenüber dem Stand der Technik den Vorteil, dass seine Stahlbandoberfläche mit dem erfindungsgemäßen Verfahren konditioniert wurde und somit in nachfolgenden Veredelungs- und Beschichtungsprozessen eine erheblich geringere Anzahl von Beschichtungsfehlern, wie Lackkrater oder dergleichen, zu erwarten ist. Das Feinblech hat insbesondere eine Materialstärke kleiner oder gleich 3 Millimeter. Die Feinbleche werden nach der Laserbehandlung bevorzugt veredelt und können besonders bevorzugt in späteren Verfahrensschritten verzinkt werden.

Ein weiterer Gegenstand der vorliegenden Erfindung ist ein Vorrichtung nach Anspruch 11.

Gemäß einer bevorzugten Ausführungsform der vorliegenden Erfindung ist vorgesehen, dass die Scannereinheit derart konfiguriert ist, dass der Laserstrahl auf der Stahlbandoberfläche einen Puls-zu-Puls- oder Zeilen-Überlapp von wenigstens 10%, bevorzugt von wenigstens 25%, besonders bevorzugt von wenigstens 50% und ganz besonders bevorzugt wenigstens 60% oder von im Wesentlichen 60% umfasst.

Gemäß einer bevorzugten Ausführungsform der vorliegenden Erfindung ist vorgesehen, dass die Scannereinheit derart konfiguriert ist, dass der Laserstrahl auf der Stahlbandoberfläche einen Puls-zu-Puls- oder Zeilen-Überlapp von 50%±10% umfasst. Auf diese Weise wird stets eine zweifache Behandlung der Stahlbandoberfläche erzielt. Alternativ wäre aber auch denkbar, dass eine einfache Behandlung der Stahlbandoberfläche gewünscht ist. In diesem Fall wird der Laserstrahl mittels der Scannereinheit insbesondere derart geführt, dass der Laserstrahl auf der Stahlbandoberfläche einen Puls-zu-Puls- oder Zeilen-Überlapp von im Wesentlichen 15%±10% umfasst.

Gemäß einer bevorzugten Ausführungsform der vorliegenden Erfindung ist vorgesehen, dass die Lasereinheit derart konfiguriert ist, dass der Laserstrahl eine Pulsenergiedichte zwischen 1 J/cm² und 10 J/cm², bevorzugt zwischen 2,25 J/cm² und 10 J/cm² und besonders bevorzugt zwischen 3,5 J/cm² und 10 J/cm² aufweist.

Gemäß einer bevorzugten Ausführungsform der vorliegenden Erfindung ist vorgesehen, dass die Scannereinheit derart konfiguriert ist, dass der Laserstrahl zeilenweise über die Stahlbandoberfläche geführt wird und der Zeilenüberlapp wenigstens 5%, bevorzugt wenigstens 10% und besonders bevorzugt wenigstens 20% umfasst. Der zeilenüberlappende cw-Laser ist von den Parametern derart eingestellt, dass er dem Puls-zu-Puls-Überlapp des gepulsten äquivalent ist.

Gemäß einer bevorzugten Ausführungsform der vorliegenden Erfindung ist vorgesehen, dass der gepulste Laserstrahl eine Pulsfrequenz zwischen 5 und 100 kHz und/oder eine Pulsdauer zwischen 10 und 100 ns, bevorzugt zwischen 20 und 60 ns, besonders bevorzugt zwischen 25 und 35 ns und ganz besonders bevorzugt von im Wesentlichen 30 ns.

Gemäß einer bevorzugten Ausführungsform der vorliegenden Erfindung ist vorgesehen, dass die Lasereinheit einen Dauerstrichlaser (auch als Permanentlaser oder cw-Laser bezeichnet) oder einen Pulslaser (auch als gepulsten Laser bezeichnet) umfasst. Die Laserparameter werden so gewählt, dass eine flächendeckende Bandbehandlung für beide Lasertypen erzielt wird. Hierbei können mehrere Lasersysteme parallel eingesetzt werden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

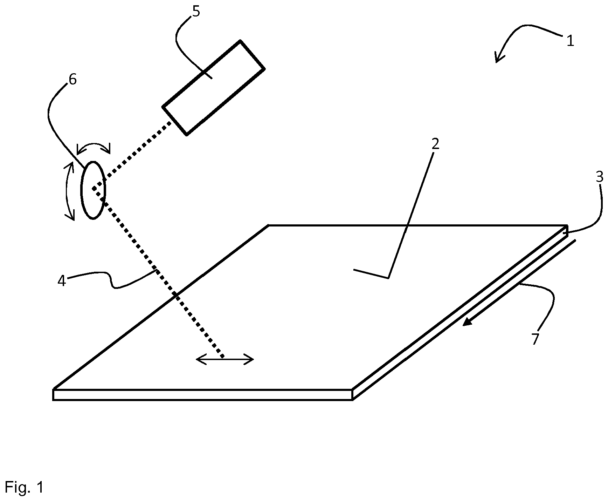

Figur 1 zeigt eine schematische Ansicht eines Verfahrens und einer Vorrichtung gemäß einer beispielhaften Ausführungsform der vorliegenden Erfindung.

### Ausführungsformen der Erfindung

In Figur 1 ist eine schematische Perspektivansicht eines Verfahrens und einer Vorrichtung 1 gemäß einer beispielhaften Ausführungsform der vorliegenden Erfindung dargestellt.

Das Verfahren und die Vorrichtung 1 dienen zur oberflächenselektiven Konditionierung von Stahlbandoberflächen 2 eines Stahlbandes 3 mittels einer zumindest partiellen Erwärmung der Stahlbandoberfläche 2 durch einen gepulsten Laserstrahl 4. Unter Konditionieren ist hierbei insbesondere ein Aufschmelzen, Einformen und Glätten der Stahlbandoberfläche 2 zu verstehen. Das Stahlband 3 umfasst insbesondere ein Feinblech aus weichem IF-Stahl, höherfestem IF-Stahl oder Mehrphasen- Stahl (RA-, DP-, CP-Stahlgüten).

Die Vorrichtung 1 weist hierfür eine Lasereinheit 5 zur Erzeugung des Laserstrahls 4 und eine Scannereinheit 6 zum sukzessiven Führen des Laserstrahls 4 über die gesamte Stahlbandoberfläche 2 auf. Die Stahlbandoberfläche 2 wird durch den Laserstrahl 4 partiell angeschmolzen, wodurch Oberflächenflächenfehler, beispielsweise in Form von Flaps, aufgeschmolzen, eingeformt und geglättet werden. Anschließend wird das Stahlband 3 elektrolytisch veredelt. In späteren Beschichtungsvorgängen), in deren Rahmen das konditionierte und veredelte Stahlband 3 mit einer Lackierung versehen wird, werden die Anzahl und die Ausmaße von Beschichtungsfehlern, wie Lackkrater, aufgrund der der Veredelung vorausgehenden Konditionierung erheblich reduziert. Die Lackierung kann beispielsweise durch eine elektrolytische Tauchlackierung (KTL) erfolgen.

Die Lasereinheit 5 umfasst einen Pulslaser oder einen Permanentlaser. Im Falle des Pulslasers setzt sich der Laserstrahl 5 aus einer Vielzahl von diskreten zeitlich begrenzten Laserpulsen zusammen. Im Falle der Verwendung eines Permanentlasers wird der Laserstrahl 4 mit entsprechender Geschwindigkeit von der Scannereinheit 6 über die Stahlbandoberfläche 2 geführt, so dass die Wechselwirkungszeit des cw-Laserstrahls auf der Stahlbandoberfläche 2 der Pulsdauer des gepulsten Lasers entspricht. Hierbei wird vorzugsweise ein kleinerer Fokus eingesetzt, um die angestrebten kurzen Wechselwirkungszeiten zu erzielen.

In beiden Fällen wird der Laserstrahl 4 von der Scannereinheit 6 zeilenweise über die Stahlbandoberfläche 2 geführt. Das Stahlband 3 wird dabei mittels einer nicht dargestellten Transportvorrichtung entlang einer Bandlaufrichtung 7 relativ zur Lasereinheit 5 bewegt. Der Puls-zu-Puls-Überlapp in einer Zeile auf der Stahlbandoberfläche 2 zwischen zwei aufeinanderfolgenden Laserpulsen ist größer als 5% und beträgt bevorzugt wenigstens 10%, besonders bevorzugt wenigstens 25%, ganz besonders bevorzugt wenigstens 60%. Der Laserstrahl hat auf der Stahlbandoberfläche insbesondere einen Puls-zu-Puls-Überlapp von im Wesentlichen 50%±20%, bevorzugt 50%±15% und besonders bevorzugt 50%±10%. Die Lasereinheit 5 bzw. Scannereinheit 6 und die Transportvorrichtung sind dabei miteinander synchronisiert, um den gewünschten Puls-zu-Puls-Überlapp zu erzielen.

Gleichzeitig weist der Laserstrahl 5 eine Pulsenergiedichte größer als 1 J/cm², bevorzugt größer als 2,25 J/cm², besonders bevorzugt größer als 3,5 auf. Vorzugsweise ist die Pulsenergiedichte kleiner oder gleich 10 J/cm².

Es hat sich überraschend gezeigt, dass insbesondere mit einer Kombination von einem Puls-zu-Puls-Überlapp von mehr als 5% und einer Pulsenergiedichte zwischen 3 und 10 J/cm² eine besonders effiziente Konditionierung der Stahlbandoberfläche 2 zur Reduzierung der Beschichtungsfehler in einem späteren Beschichtungsvorgang zu erzielen ist.

Der Laserstrahl 4 umfasst hierbei vorzugsweise eine Pulsdauer zwischen 10 und 100 ns, eine Pulsfrequenz zwischen 5 und 100 kHz.

Die Laserstrahloptik der Lasereinheit 5 ist insbesondere derart justiert, dass auf der Stahlbandoberfläche 2 von einem Laserpuls ein Lichtfleck mit einer im Wesentlichen kreisrunden Grundfläche erzeugt wird, welche einen Durchmesser zwischen 1 und 1,2 Millimeter Durchmesser aufweist. Besonders bevorzugt wird ein Lichtfleck mit einer quadratischen oder rechteckigen Grundfläche mit einer Kantenlänge zwischen 1 und 1,2 Millimeter erzeugt.

Die Scannereinheit 6 kann beispielsweise einen beweglichen Spiegel umfassen, über welchen der aus der Lasereinheit 5 kommende Laserstrahl 4 in Richtung der Stahlbandoberfläche 2 gelenkt wird, wobei durch die Bewegung des Spiegels der Laserstrahl 4 zeilenweise über die Stahlbandoberfläche 2 geführt wird.

### Beispiel

Im Rahmen einer experimentellen Testreihe wurden für Lackkrater anfällige Testbleche (DIN A4-Format) zunächst mittels Laserpulsstrahlen unterschiedlich stark behandeln. Daraufhin erfolgte im Labor die Veredelung der Testbleche durch elektrolytische Verzinkung. Anschließend wurde in einem separaten Stücklackierprozess die eigentliche elektrolytische Tauchlackierung (KT-Lackierung) vorgenommen und nach Trocknung des KT-Lacks eine visuelle Bewertung der Lackqualität durch Auszählen der sichtbaren KTL-Lackstörungen (Sog. Löcher und/oder Pusteln) bewertet. Die Ergebnisse sind in der nachstehenden Tabelle ausgeführt.

| | Probe | Pulsüberlapp | Pulsenergiedichte | Anzahl KTL-Störungen auf 6dm² Probenfläche | | |
|---|---|---|---|---|---|---|
| | | [%] | [J/cm²] | Löcher | Pusteln | Summe |
| 1 | 1 | - | - | 132000 | 16200 | 148200 |
| 2 | 1 | 5 | 1,00 | 18750 | 2625 | 21375 |
| 3 | 1 | 5 | 2,25 | 19500 | 1125 | 20625 |
| 4 | 1 | 5 | 3,50 | 300 | 13 | 313 |
| 5 | 1 | 5 | 4,75 | 713 | 150 | 863 |
| 6 | 1 | 5 | 6,00 | 8063 | 938 | 9001 |
| 7 | 1 | - | - | 132000 | 16200 | 148200 |
| 8 | 1 | 60 | 1,00 | 75000 | 1125 | 76625 |
| 9 | 1 | 60 | 2,25 | 225 | 0 | 225 |
| 10 | 1 | 60 | 3,50 | 113 | 0 | 113 |
| 11 | 1 | 60 | 4,75 | 75 | 38 | 113 |
| 12 | 1 | 60 | 6,00 | 0 | 0 | 0 |
| 13 | 2 | - | - | 228000 | 8400 | 236400 |
| 14 | 2 | 5 | 1,00 | 12750 | 1500 | 14250 |
| 15 | 2 | 5 | 2,25 | 788 | 75 | 863 |
| 16 | 2 | 5 | 3,50 | 150 | 38 | 188 |
| 17 | 2 | 5 | 4,75 | 488 | 75 | 563 |
| 18 | 2 | 5 | 6,00 | 13125 | 2625 | 15750 |
| 19 | 2 | - | - | 228000 | 8400 | 236400 |
| 20 | 2 | 60 | 1,00 | 3075 | 75 | 3150 |
| 21 | 1 | 60 | 2,25 | 563 | 150 | 713 |
| 22 | 2 | 60 | 3,50 | 75 | 38 | 113 |
| 23 | 2 | 60 | 4,75 | 0 | 0 | 0 |
| 24 | 2 | 60 | 6,00 | 75 | 38 | 113 |

Bei einigen Testreihen wurden die Feinbleche vor der elektrolytischen Laborverzinkung nicht laserbehandelt (siehe Testreihe 1, 7, 13 und 19), während bei den übrigen Testreihen die Oberflächen der Feinbleche vor der elektrolytischen Laborverzinkung mit einem Laserstrahl flächendeckend entsprechend vorherigen Ausführungen behandelt wurden (siehe Testreihe 2 bis 6, 8 bis 12, 14 bis 18 und 20 bis 24). Bei den Testreihen 2 bis 6 und 14 bis 18 wurde ein Puls-zu-Puls-Überlapp von 5 Prozent verwendet, während bei den Testreihen 8 bis 12 und 20 bis 24 ein Puls-zu-Puls-Überlapp von 60 Prozent Verwendung fand. Bei den Testreihen 2 bis 6, 8 bis 12, 14 bis 18 und 20 bis 24 wurden jeweils die Pulsenergiedichten schrittweise von 1 J/cm² bis 6 J/cm² erhöht.

Der Laserstrahl wurde bei den Testreihen zeilenweise mit einem Linienüberlapp von 20 Prozent über die Feinblechoberfläche geführt. Der Laser ist derart auf die Feinblechoberfläche fokussiert, dass auf der Feinblechoberfläche von jedem Laserpuls ein im Wesentlichen quadratischer Lichtfleck mit 1,1 x 1,1 Millimetern erzeugt wird. Die Pulsdauer eines Laserpulses umfasst ca. 30 ns.

Die Beschichtungsfehler wurden in Löcher und Pusteln unterteilt, die durch bekannte optische Verfahren, wie eines Lichtmikroskops, gezählt bzw. hochgerechnet wurden. Vorliegend wurde zur Ermittlung der Lackstörungen eine stereomikroskopische Untersuchung der Lackoberfläche der Testbleche in der Größe von 100 x 300 Millimeter durchgeführt. Die Probenrandbereiche von ca. 5 Millimeter wurden dabei nicht berücksichtigt. Der Fachmann unterscheidet aufgrund der optischen Fehlermerkmale zwischen Löchern und Pusteln in der Lackschicht. Im Allgemeinen geschieht dies bei etwa 15-facher Vergrößerung und flacher, seitlicher Beleuchtung der Probe. Durch gezieltes Abrastern der Lackoberfläche eines Testblechs ergibt sich in Abhängigkeit von der Stärke des Fehlerbefalls eine konkrete Bewertung auf Basis von Probenflächen zwischen 10 und 100 cm².

Der Tabelle ist zu entnehmen, dass die Anzahl von Beschichtungsfehler durch eine Laserbehandlung mit einem Puls-zu-Puls-Überlapp von mehr als 5 Prozent und einer Pulsenergiedichte von mehr als 2,25 J/cm² erheblich reduziert werden kann.

Die Kombination von einem Puls-zu-Puls-Überlapp von 60% und einer Pulsenergiedichte zwischen 3,5 und 6 J/cm² scheint besonders vorteilhaft zu sein, da hierbei eine besonders niedrige Anzahl von Beschichtungsfehlern auftritt.

### Bezugszeichenliste

- 1: Vorrichtung
- 2: Stahlbandoberfläche
- 3: Stahlband
- 4: Laserstrahl
- 5: Lasereinheit
- 6: Scannereinheit
- 7: Bandlaufrichtung

## Patentansprüche

1. Verfahren zur oberflächenselektiven Konditionierung von Stahlbandoberflächen (2), bei welchem eine zumindest partielle Erwärmung der Stahlbandoberfläche (2) durch einen Laserstrahl (4) erfolgt, wobei der Laserstrahl (4) mittels einer Lasereinheit (5) erzeugt wird und wobei der Laserstrahl (4) mittels einer Scannereinheit (6) sukzessive über die unbeschichtete Stahlbandoberfläche (2) geführt wird, wobei der Laserstrahl (4) mittels der Scannereinheit (6) derart geführt wird, dass der Laserstrahl (4) auf der Stahlbandoberfläche (2) im Falle eines gepulsten Lasers einen Puls-zu-Puls-Überlapp oder im Falle eines Dauerstrichlasers einen Zeilen-Überlapp von mehr als 5% umfasst, wobei das Stahlband (3) in einem anschließenden Beschichtungsprozess beschichtet wird

2. Verfahren nach Anspruch 1, wobei der Laserstrahl (4) mittels der Scannereinheit (6) derart geführt wird, dass der Laserstrahl (4) auf der Stahlbandoberfläche (2) einen Puls-zu-Puls- oder Zeilen-Überlapp von wenigstens 10%, bevorzugt von wenigstens 25%, besonders bevorzugt von wenigstens 50% und ganz besonders bevorzugt wenigstens 60% oder im Wesentlichen 60% umfasst.

3. Verfahren nach einem der vorhergehenden Ansprüche, wobei der Laserstrahl (4) mittels der Scannereinheit (6) derart geführt wird, dass der Laserstrahl (4) auf der Stahlbandoberfläche (2) einen Puls-zu-Puls- oder Zeilen-Überlapp von 15% ± 10% umfasst.

4. Verfahren nach einem der vorhergehenden Ansprüche, wobei der Laserstrahl (4) mittels der Scannereinheit (6) derart geführt wird, dass der Laserstrahl (4) auf der Stahlbandoberfläche (2) einen Puls-zu-Puls- oder Zeilen-Überlapp von 60% ± 10% umfasst.

5. Verfahren zur oberflächenselektiven Konditionierung von Stahlbandoberflächen (2), nach einem der vorhergehenden Ansprüche, wobei die Lasereinheit (5) derart konfiguriert ist, dass ein Laserstrahl (4) mit einer Pulsenergiedichte größer als 1 J/cm² ausgestrahlt wird.

6. Verfahren nach Anspruch 4, wobei mittels der Lasereinheit (5) ein Laserstrahl (4) mit Pulsenergiedichten zwischen 1 J/cm² und 10 J/cm², bevorzugt zwischen 2,25 J/cm² und 10 J/cm² und besonders bevorzugt zwischen 3,5 J/cm² und 10 J/cm² ausgestrahlt wird.

7. Verfahren nach einem der vorhergehenden Ansprüche, wobei der Laserstrahl (4) mittels der Scannereinheit (6) zeilenweise über die Stahlbandoberfläche (2) geführt wird, wobei der Laserstrahl (4) dabei derart geführt wird, dass der Zeilenüberlapp wenigstens 5%, bevorzugt wenigstens 10% und besonders bevorzugt wenigstens 20% umfasst.

8. Verfahren nach einem der vorhergehenden Ansprüche, wobei mittels der Lasereinheit (5) ein Laserstrahl (4) mit einer Pulsdauer zwischen 10 und 100 ns, bevorzugt zwischen 20 und 60 ns, besonders bevorzugt zwischen 25 und 35 ns und ganz besonders bevorzugt von im Wesentlichen 30 ns ausgestrahlt wird.

9. Verfahren nach einem der vorhergehenden Ansprüche, wobei mittels der Lasereinheit (5) ein Laserstrahl (4) mit einer Pulsfrequenz zwischen 5 und 100 kHz ausgestrahlt wird.

10. Verfahren nach einem der vorhergehenden Ansprüche, wobei das Verfahren unter Umgebungsatmosphäre durchgeführt wird oder wobei das Verfahren unter einer Schutzgasatmosphäre durchgeführt wird, welche insbesondere ein mit der Oberfläche des Stahlbands (3) nicht reagierendes Gas oder Gasgemisch ist.

11. Vorrichtung (1) zur oberflächenselektiven Konditionierung von unbeschichteten Stahlbandoberflächen (2) mittels einer zumindest partiellen Erwärmung der Stahlbandoberfläche (2) durch einen Laserstrahl (4) und einem anschließenden Beschichtungsprozess mit einem Verfahren nach einem der vorhergehenden Ansprüche, wobei die Vorrichtung (1) eine Lasereinheit (5) zur Erzeugung des Laserstrahls (4) und eine Scannereinheit (6) zum sukzessive Führen des Laserstrahls (4) über die unbeschichtete Stahlbandoberfläche (2) aufweist, wobei die Scannereinheit (6) derart konfiguriert ist, dass der Laserstrahl (4) auf der Stahlbandoberfläche (2) einen Puls-zu-Puls- oder Zeilen-Überlapp von mehr als 5% umfasst, und/oder wobei die Lasereinheit (5) derart konfiguriert ist, dass der Laserstrahl (4) eine Pulsenergiedichte größer als 1 J/cm² aufweist.

12. Vorrichtung (1) nach Anspruch 14, wobei die Scannereinheit (6) derart konfiguriert ist, dass der Laserstrahl (4) auf der Stahlbandoberfläche (2) einen Puls-zu-Puls- oder Zeilen-Überlapp von wenigstens 10%, bevorzugt von wenigstens 25%, besonders bevorzugt von wenigstens 50% und ganz besonders bevorzugt wenigstens 60% oder im Wesentlichen 60% umfasst und/oder wobei die Scannereinheit (6) derart konfiguriert ist, dass der Laserstrahl (4) auf der Stahlbandoberfläche (2) einen Puls-zu-Puls- oder Zeilen-Überlapp von im Wesentlichen 15% ± 10% umfasst und/oder wobei die Scannereinheit (6) derart konfiguriert ist, dass der Laserstrahl (4) auf der Stahlbandoberfläche (2) einen Puls-zu-Puls- oder Zeilen-Überlapp von im Wesentlichen 50% ± 10% umfasst.

13. Vorrichtung (1) nach einem der Ansprüche 14 oder 15, wobei die Lasereinheit (5) derart konfiguriert ist, dass der Laserstrahl (4) eine Pulsenergiedichte größer als 2,25 J/cm², bevorzugt größer als 3,5 J/cm² und besonders bevorzugt größer als 4,75 J/cm² umfasst.

14. Vorrichtung (1) nach einem der Ansprüche 14 bis 16, wobei die Scannereinheit (6) derart konfiguriert ist, dass der Laserstrahl (4) zeilenweise über die Stahlbandoberfläche (2) geführt wird und der Linienüberlapp wenigstens 5%, bevorzugt wenigstens 10% und besonders bevorzugt wenigstens 20% umfasst.

15. Vorrichtung (1) nach einem der Ansprüche 14 bis 17, wobei der Laserstrahl (4) eine Pulsfrequenz zwischen 5 und 100 kHz und/oder eine Pulsdauer zwischen 10 und 100 ns, bevorzugt zwischen 20 und 60 ns, besonders bevorzugt zwischen 25 und 35 ns und ganz besonders bevorzugt von im Wesentlichen 30 ns.

16. Vorrichtung (1) nach einem der Ansprüche 14 bis 18, wobei die Lasereinheit (5) einen Dauerstrichlasers oder einen Pulslaser umfasst.

## Claims

1. Method for surface-selective conditioning of steel strip surfaces (2), in which the steel strip surface (2) is at least partially heated by a laser beam (4), wherein the laser beam (4) is generated by way of a laser unit (5) and wherein the laser beam (4) is successively guided over the uncoated steel strip surface (2) by way of a scanner unit (6), wherein the laser beam (4) is guided by way of the scanner unit (6) such that the laser beam (4) comprises on the steel strip surface (2) a pulse-to-pulse overlap in the case of a pulsed laser or a line overlap of more than 5% in the case of a continuous wave laser, wherein the steel strip (3) is coated in a subsequent coating process.

2. Method according to Claim 1, wherein the laser beam (4) is guided by way of the scanner unit (6) such that the laser beam (4) comprises on the steel strip surface (2) a pulse-to-pulse overlap or line overlap of at least 10%, preferably of at least 25%, with particular preference of at least 50% and, with very particular preference, at least 60% or substantially 60%.

3. Method according to either of the preceding claims, wherein the laser beam (4) is guided by way of the scanner unit (6) such that the laser beam (4) comprises on the steel strip surface (2) a pulse-to-pulse overlap or line overlap of 15% ± 10%.

4. Method according to one of the preceding claims, wherein the laser beam (4) is guided by way of the scanner unit (6) such that the laser beam (4) comprises on the steel strip surface (2) a pulse-to-pulse overlap or line overlap of 60% ± 10%.

5. Method for surface-selective conditioning of steel strip surfaces (2) according to one of the preceding claims, wherein the laser unit (5) is configured such that a laser beam (4) with a pulse energy density of greater than 1 J/cm² is emitted.

6. Method according to Claim 4, wherein a laser beam (4) with pulse energy densities of between 1 J/cm² and 10 J/cm², preferably between 2.25 J/cm² and 10 J/cm² and very particularly preferably between 3.5 J/cm² and 10 J/cm², is emitted by way of the laser unit (5).

7. Method according to one of the preceding claims, wherein the laser beam (4) is guided in line-wise fashion over the steel strip surface (2) by way of the scanner unit (6), wherein the laser beam (4) is guided such that the line overlap comprises at least 5%, preferably at least 10% and very particularly preferably at least 20%.

8. Method according to one of the preceding claims, wherein a laser beam (4) with a pulse duration of between 10 and 100 ns, preferably between 20 and 60 ns, particularly preferably between 25 and 35 ns and very particularly preferably of substantially 30 ns, is emitted by way of the laser unit (5).

9. Method according to one of the preceding claims, wherein a laser beam (4) with a pulse frequency of between 5 and 100 kHz is emitted by way of the laser unit (5).

10. Method according to one of the preceding claims, wherein the method is performed under ambient atmosphere or wherein the method is performed under an inert gas atmosphere, which is in particular a gas or gas mixture that does not react with the surface of the steel strip (3) .

11. Apparatus (1) for surface-selective conditioning of uncoated steel strip surfaces (2) by way of at least partially heating the steel strip surface (2) by way of a laser beam (4) and a subsequent coating process with a method according to one of the preceding claims, wherein the apparatus (1) has a laser unit (5) for generating the laser beam (4) and a scanner unit (6) for successively guiding the laser beam (4) over the uncoated steel strip surface (2), wherein the scanner unit (6) is configured such that the laser beam (4) comprises on the steel strip surface (2) a pulse-to-pulse overlap or line overlap of more than 5%, and/or wherein the laser unit (5) is configured such that the laser beam (4) has a pulse energy density of greater than 1 J/cm².

12. Apparatus (1) according to Claim 14, wherein the scanner unit (6) is configured such that the laser beam (4) comprises on the steel strip surface (2) a pulse-to-pulse overlap or line overlap of at least 10%, preferably of at least 25%, with particular preference of at least 50% and, with very particular preference, at least 60% or substantially 60%, and/or wherein the scanner unit (6) is configured such that the laser beam (4) comprises on the steel strip surface (2) a pulse-to-pulse overlap or line overlap of substantially 15% ± 10% and/or wherein the scanner unit (6) is configured such that the laser beam (4) comprises on the steel strip surface (2) a pulse-to-pulse overlap or line overlap of substantially 50% ± 10%.

13. Apparatus (1) according to either of Claims 14 and 15, wherein the laser unit (5) is configured such that the laser beam (4) comprises a pulse energy density of greater than 2.25 J/cm², preferably greater than 3.5 J/cm² and particularly preferably greater than 4.75 J/cm².

14. Apparatus (1) according to one of Claims 14 to 16, wherein the scanner unit (6) is configured such that the laser beam (4) is guided in line-wise fashion over the steel strip surface (2) and the line overlap comprises at least 5%, preferably at least 10% and very particularly preferably at least 20%.

15. Apparatus (1) according to one of Claims 14 to 17, wherein the laser beam (4) has a pulse frequency of between 5 and 100 kHz and/or a pulse duration of between 10 and 100 ns, preferably between 20 and 60 ns, particularly preferably between 25 and 35 ns and very particularly preferably of substantially 30 ns.

16. Apparatus (1) according to one of Claims 14 to 18, wherein the laser unit (5) comprises a continuous wave laser or a pulsed laser.

## Revendications

1. Procédé de conditionnement sélectif en surface de surfaces de feuillards d'acier (2), dans lequel un chauffage au moins partiel de la surface du feuillard d'acier (2) est effectué au moyen d'un faisceau laser (4), dans lequel le faisceau laser (4) est généré au moyen d'une unité à laser (5) et dans lequel le faisceau laser (4) est guidé successivement sur la surface non revêtue du feuillard d'acier (2) au moyen d'une unité de balayage (6), dans lequel le faisceau laser (4) est guidé au moyen de l'unité de balayage (6) de telle manière que le faisceau laser (4) présente, sur la surface du feuillard d'acier (2), un chevauchement d'impulsion à impulsion, dans le cas d'un laser pulsé, ou un chevauchement de lignes, dans le cas d'un laser à onde continue, de plus de 5%, dans lequel le feuillard d'acier (3) est revêtu lors d'un processus de revêtement ultérieur.

2. Procédé selon la revendication 1, dans lequel le faisceau laser (4) est guidé au moyen de l'unité de balayage (6) de telle manière que le faisceau laser (4) présente, sur la surface du feuillard d'acier (2), un chevauchement d'impulsion à impulsion ou de lignes d'au moins 10 %, de préférence d'au moins 25 %, de manière particulièrement préférée d'au moins 50 % et de manière tout particulièrement préférée d'au moins 60 % ou de sensiblement 60 %.

3. Procédé selon l'une des revendications précédentes, dans lequel le faisceau laser (4) est guidé au moyen de l'unité de balayage (6) de telle manière que le faisceau laser (4) présente, sur la surface du feuillard d'acier (2), un chevauchement d'impulsion à impulsion ou de lignes de 15 % ± 10 %.

4. Procédé selon l'une des revendications précédentes, dans lequel le faisceau laser (4) est guidé au moyen de l'unité de balayage (6) de telle manière que le faisceau laser (4) présente, sur la surface du feuillard d'acier (2), un chevauchement d'impulsion à impulsion ou de lignes de 60 % ± 10 %.

5. Procédé de conditionnement sélectif en surface de surfaces de feuillards d'acier (2), selon l'une des revendications précédentes, dans lequel l'unité à laser (5) est configurée de telle manière qu'un faisceau laser (4) présentant une densité d'énergie d'impulsion supérieure à 1 J/cm² soit émis.

6. Procédé selon la revendication 4, dans lequel un faisceau laser (4) présentant des densités d'énergie d'impulsion comprises entre 1 J/cm² et 10 J/cm², de préférence entre 2,25 J/cm² et 10 J/cm² et de manière particulièrement préférée entre 3,5 J/cm² et 10 J/cm² est émis au moyen de l'unité à laser (5).

7. Procédé selon l'une des revendications précédentes, dans lequel le faisceau laser (4) est guidé ligne par ligne sur la surface du feuillard d'acier (2) au moyen de l'unité de balayage (6), dans lequel le faisceau laser (4) est guidé de telle manière que le chevauchement de lignes soit d'au moins 5%, de préférence d'au moins 10% et de manière particulièrement préférée d'au moins 20%.

8. Procédé selon l'une des revendications précédentes, dans lequel un faisceau laser (4) présentant une durée d'impulsion comprise entre 10 et 100 ns, de préférence entre 20 et 60 ns, de manière particulièrement préférée entre 25 et 35 ns et de manière tout particulièrement préférée de sensiblement 30 ns est émis au moyen de l'unité à laser (5).

9. Procédé selon l'une des revendications précédentes, dans lequel un faisceau laser (4) présentant une fréquence d'impulsion comprise entre 5 et 100 kHz est émis au moyen de l'unité à laser (5).

10. Procédé selon l'une des revendications précédentes, dans lequel le procédé est mis en œuvre sous une atmosphère ambiante ou dans lequel le procédé est mis en œuvre sous une atmosphère d'un gaz protecteur, qui est notamment un gaz ou un mélange de gaz qui ne réagit pas avec la surface du feuillard d'acier (3).

11. Dispositif (1) de conditionnement sélectif en surface de surfaces de feuillards d'acier (2) non revêtues, au moyen d'un chauffage au moins partiel de la surface du feuillard d'acier (2) par un faisceau laser (4) et d'un processus de revêtement ultérieur à l'aide d'un procédé selon l'une des revendications précédentes, dans lequel le dispositif (1) comprend une unité à laser (5) destinée à générer le faisceau laser (4) et une unité de balayage (6) destinée à guider successivement le faisceau laser (4) sur la surface non revêtue du feuillard d'acier (2), dans lequel l'unité de balayage (6) est configurée de telle manière que le faisceau laser (4) présente, sur la surface du feuillard d'acier (2), un chevauchement d'impulsion à impulsion ou de lignes de plus de 5 %, et/ou dans lequel l'unité à laser (5) est configurée de telle manière que le faisceau laser (4) présente une densité d'énergie d'impulsion supérieure à 1 J/cm².

12. Dispositif (1) selon la revendication 14, dans lequel l'unité de balayage (6) est configurée de telle manière que le faisceau laser (4) présente, sur la surface du feuillard d'acier (2), un chevauchement d'impulsion à impulsion ou de lignes d'au moins 10 %, de préférence d'au moins 25 %, de manière particulièrement préférée d'au moins 50 % et de manière tout particulièrement préférée d'au moins 60 % ou de sensiblement 60 % et/ou dans lequel l'unité de balayage (6) est configurée de telle manière que le faisceau laser (4) présente, sur la surface du feuillard d'acier (2), un chevauchement d'impulsion à impulsion ou de lignes de sensiblement 15 % ± 10 % et/ou dans lequel l'unité de balayage (6) est configurée de telle manière que le faisceau laser (4) présente, sur la surface du feuillard d'acier (2), un chevauchement d'impulsion à impulsion ou de lignes de sensiblement 50% ± 10%.

13. Dispositif (1) selon l'une des revendications 14 ou 15, dans lequel l'unité à laser (5) est configurée de telle manière que le faisceau laser (4) présente une densité d'énergie d'impulsion supérieure à 2,25 J/cm2, de préférence supérieure à 3,5 J/cm2 et de manière particulièrement préférée supérieure à 4,75 J/cm2.

14. Dispositif (1) selon l'une des revendications 14 à 16, dans lequel l'unité de balayage (6) est configurée de telle manière que le rayon laser (4) soit guidé ligne par ligne sur la surface du feuillard d'acier (2) et que le chevauchement de lignes soit d'au moins 5 %, de préférence d'au moins 10 % et de manière particulièrement préférée d'au moins 20 %.

15. Dispositif (1) selon l'une des revendications 14 à 17, dans lequel le faisceau laser (4) présente une fréquence d'impulsion comprise entre 5 et 100 kHz et/ou une durée d'impulsion comprise entre 10 et 100 ns, de préférence entre 20 et 60 ns, de manière particulièrement préférée entre 25 et 35 ns et de manière tout particulièrement préférée de sensiblement 30 ns.

16. Dispositif (1) selon l'une des revendications 14 à 18, dans lequel l'unité à laser (5) comprend un laser à onde continue ou un laser pulsé.
